# EUROPÄISCHE PATENTSCHRIFT

(11) **EP 4 253 826 B1**
(45) Veröffentlichungstag und Bekanntmachung des Hinweises auf die Patenterteilung: **19.11.2025**
(21) Anmeldenummer: 23161226.8
(22) Anmeldetag: 10.03.2023
(51) Int. Cl.: F21S 4/20, F21V 21/00, F21V 31/00, B61D 23/00, F21W 111/027, F21Y 103/10, F21Y 115/10

(54) **LICHTLEISTENANORDNUNG FÜR EINE TREPPENSTUFE**
LIGHT STRIP ASSEMBLY FOR A STAIR TREAD
ENSEMBLE DE BARRE LUMINEUSE POUR UNE MARCHE D'ESCALIER

(30) Priorität: 01.04.2022 DE 202022101770 U
(43) Veröffentlichungstag der Anmeldung: 04.10.2023
(73) Patentinhaber: Frensch GmbH, 47229 Duisburg (DE)
(72) Erfinder: Frensch, Achim, 47229 Duisburg (DE); Frensch, Frank, 47229 Duisburg (DE)
(74) Vertreter: Seyer & Nobbe Patentanwälte PartmbB

(56) Entgegenhaltungen:
- EP-A1- 2 783 917
- EP-A1- 3 459 791
- CA-A1- 2 282 819
- US-A- 6 076 936
- US-A- 6 145 996
- US-A1- 2003 223 233

## Beschreibung

Die Erfindung betrifft eine Lichtleistenanordnung, insbesondere für Türen eines öffentlichen Verkehrsmittels, bestehend aus einer Treppenstufe mit einer Aufnahmenut und einer Lichtleiste, welche in die Aufnahmenut einsetzbar ist, wobei sich die Aufnahmenut unterhalb der vorderen sichtbaren Kante befindet und wobei die Aufnahmenut mit zwei Rastmitteln ausgestattet ist, welche ein Hintergreifen durch eine Aufnahmeschiene mit korrespondierenden Verriegelungselementen vorsieht und die Lichtleiste in der Aufnahmeschiene festgelegt ist.

Um eine mögliche Stolper- und Sturzgefahr bei Treppenstufen zu vermeiden, werden seit vielen Jahren die Treppenstufen von öffentlichen Verkehrsmitteln mit einer Lichtleiste versehen, die zumindest eine darunter liegende Treppenstufe beziehungsweise den Einstiegsbereich ausleuchtet. Die Fahrgäste erhalten somit eine wirksame Orientierungshilfe, um in das öffentliche Verkehrsmittel einsteigen zu können. Typischerweise werden die Treppenstufen beim Öffnen und Schließen der Türen horizontal bewegt und in den Bodenbereich der Verkehrsmittel beim Schließen der Türen eingefahren. Je nachdem, wie hoch der Bordstein angeordnet ist, kann hierbei eine gegebenenfalls auch zwei Treppenstufen des öffentlichen Verkehrsmittels ausgefahren werden. Bevorzugt kommen die Treppenstufen bei Bussen, Straßenbahnen oder anderen schienengebundenen Fahrzeugen, beispielsweise Eisenbahnzügen zum Einsatz.

Die Treppenstufen unterliegen einer starken Belastung und können bei schlechtem Wetter sehr schnell verschmutzen. Aus diesem Grund ist eine regelmäßige Reinigung des Verkehrsmittels einschließlich der Treppenstufen erforderlich. Eine solche Reinigung erfolgt typischerweise mithilfe eines Hochdruckreinigers, wodurch Spritzwasser auch in die empfindliche Elektronik und der LEDs geraten kann. Aus diesem Grund besteht immer wieder die Gefahr, dass entweder die gesamte Lichtleiste nicht mehr funktioniert oder eine größere Anzahl von LEDs ausfallen. Spätestens zu diesem Zeitpunkt besteht die Notwendigkeit die Lichtleiste auszutauschen.

Eine bekannte Ausführung sieht hierbei vor, dass die Lichtleiste unmittelbar in eine vorhandene Nut der Treppenstufen eingesetzt und mit einem transparenten Kunststoffmaterial ausgespritzt wird. Ferner besteht die Möglichkeit, eine transparente Schutzblende vor der Lichtleiste anzubringen. Diese Lösung hat sich aber nicht als praktikabel gezeigt, weil im Fall einer defekten Lichtleiste die vollständige Treppenstufe ausgetauscht werden muss, da die Lichtleisten in der Regel aufgrund der Bauweise nicht mehr aus der Nut entfernt werden können. Der Austausch einer Trittstufe bewirkt in einem solchen Fall einen hohen Materialeinsatz und entsprechende Kosten für den Austausch.

Aus dem US-Patent 6,145,996 ist ein Beleuchtungssystem für Sitzreihen in einem Kino oder Theater bekannt. Hierbei werden korrespondierende Schienenelemente verwendet, die beispielsweise unterhalb einer Armlehne oder unterhalb von Trittstufen angeordnet sind. Ein Schienenelement dient hierbei zur Befestigung entweder an den Armlehnen oder den Trittstufen, während das andere Schienenelement zur Aufnahme von Leuchtmitteln vorgesehen ist und im ersten Schienenelement eingeklipst wird.

Aus der europäischen Patentanmeldung EP 2 783 917 A1 ist ein Stufenprofil bekannt, welches ebenfalls mit Lichtleisten ausgestattet wird. Die Lichtleisten können sich entweder auf der Auftrittfläche oder unterhalb des Stufenprofils befinden, wobei die Leuchtmittel in einer annähernd U-förmigen Schiene angeordnet sind, welche mit zwei Schenkeln in den vorhandenen Ausnehmungen eingeklipst werden können.

Aus der europäischen Patentanmeldung EP 3 459 791 A1 ist eine Lichtleiste bekannt, die bei bewegten Trittstufen angebracht werden kann. Hierbei ist vorgesehen, dass die Lichtleisten entweder im hinteren Bereich der Trittstufe oder in vorhandenen Nuten der Auftritte befestigt werden. Hierzu werden einklipsbare Schienen verwendet, die die Leuchtmittel enthalten.

Die Patentanmeldung US 2003/223233 A1 offenbart den Oberbegriff des Anspruchs 1.

Die bekannten Lösungen sind für die Verwendung unterhalb einer Trittstufe nur bedingt geeignet.

Aus den vorgenannten Gründen liegt der vorliegenden Erfindung die Aufgabenstellung zugrunde, eine austauschbare Lichtleiste mit weiterhin verwendbaren Trittstufen aufzuzeigen und eine optimale Ausleuchtung der darunter befindlichen Trittstufe zu ermöglichen.

Erfindungsgemäß ist zur Lösung der Aufgabenstellung vorgesehen, dass beide Schenkel der Aufnahmeschiene auf der Innenseite jeweils eine rechteckförmige Aussparung aufweisen, welche unterschiedliche Abstände zur Basis aufweisen. Weitere vorteilhafte Ausgestaltungen der Erfindung ergeben sich aus den Unteransprüchen.

Gegenüber der bisherigen Variante ist die Lichtleiste nicht unmittelbar in der Aufnahmenut der Treppenstufe eingebettet, sondern liegt in einer Aufnahmeschiene ein, welche mit korrespondierenden Verriegelungselementen in die Aufnahmenut einsetzbar ist und durch zwei Rastnasen innerhalb der Aufnahmenut gehalten wird. Durch die verwendete Aufnahmeschiene besteht der wesentliche Vorteil, dass diese bei einem Defekt der Lichtleiste ausgetauscht werden kann und somit ein Ein- und Ausbau der Treppenstufe entfällt. Die Treppenstufe kann, nach wie vor, weiterverwendet werden und lediglich die Aufnahmeschiene muss aus der Aufnahmenut entfernt werden, um eine neue Lichtleiste einzusetzen. Vorzugsweise besteht die Aufnahmeschiene hierbei aus einem transparenten Kunststoff, sodass die LEDs ihr Licht durch die Aufnahmeschiene hindurch abstrahlen können. Gleichzeitig ist die Lichtleiste durch die Aufnahmeschiene vor Beschädigungen, beispielsweise Tritten geschützt.

Der besondere Vorteil, der hierdurch entsteht, ist der, dass die Aufnahmeschiene mit Lichtleiste jederzeit ausgetauscht werden kann und damit ein ressourceschonender Austausch durch die Weiterverwendung der Trittstufen ermöglicht wird.

In Ausgestaltung der Erfindung ist vorgesehen, dass die Aufnahmenut einen annähernd U-förmigen Querschnitt mit zwei Schenkeln aufweist. Die beiden Schenkel dienen zur Aufnahme der Aufnahmeschiene, um diese beispielsweise bis auf die sichtbare Stirnfläche einzufassen, wodurch eine Beschädigungsgefahr deutlich herabgesetzt wird.

In weiterer Ausgestaltung der Erfindung ist vorgesehen, dass die Aufnahmenut an ihren beiden Schenkeln jeweils eine nach innen weisende Rastnase oder einen Vorsprung als Rastmittel aufweist. Die Rastnase beziehungsweise der Vorsprung dient hierbei zur Verriegelung der Aufnahmeschiene, um diese einzuclipsen und bei einem notwendigen Austausch, aufgrund des Ausfalls von mindestens einigen LEDs eine schnelle Demontage sowie das Einsetzen einer neuen Aufnahmeschiene mit Lichtleiste zu ermöglichen.

In weiterer Ausgestaltung der Erfindung ist vorgesehen, dass die Aufnahmeschiene für die Lichtleiste ebenfalls einen annähernd U-förmigen Querschnitt aufweist. Die Aufnahmeschiene besitzt insofern ebenfalls eine Basis und zwei Schenkel, die in diesem Fall in die Aufnahmenut der Treppenstufe eingedrückt werden können. Mit dem Eindrücken der Aufnahmeschiene kann diese an den Rastnasen anliegen und/oder die Rastnasen verriegelt hintergreifen, um einen ausreichenden Halt zu gewährleisten.

Die Aufnahmeschiene ist mit einer nach außen gewölbten Basis ausgestattet und zwei nach innen zur Aufnahmenut ausgerichteten Schenkeln. Die nach außen gewölbte Basis ist ebenso, wie die gesamte Aufnahmeschiene transparent ausgeführt, sodass das abgestrahlte Licht der LEDs durch die transparente Basis hindurch nach außen gelangt und damit den unteren Bereich der Trittstufe oder gegebenenfalls des Bordsteins ausleuchten kann.

Zur sicheren Befestigung der Aufnahmeschiene ist im Weiteren vorgesehen, dass die Aufnahmeschiene einen ersten Schenkel besitzt, welcher auf der Außenseite in Höhe der Basis eine rechteckförmige Ausnehmung aufweist. Diese Ausnehmung ist zur Aufnahme eines Vorsprungs der Aufnahmenut vorgesehen. Somit liegt die Aufnahmeschiene unterhalb des Vorsprungs und garantiert einen sicheren Halt der Aufnahmeschiene.

In Weiterer Ausgestaltung der Erfindung ist vorgesehen, dass die Aufnahmeschiene einen zweiten Schenkel aufweist, welcher zum ersten Schenkel geneigt verläuft. Der zweite Schenkel ist zum Hintergreifen einer weiteren Rastnase der Aufnahmenut vorgesehen, um im Bereich der Öffnung der Aufnahmenut eine sichere Befestigung zu gewährleisten.

Erfindungsgemäß ist hierbei vorgesehen, dass das freie Ende des zweiten Schenkels der Aufnahmeschiene gabelförmig aufgespalten ist, wobei das zum ersten Schenkel ausgerichtete Schenkelteil abstützend zur Anlage an der Basis der Aufnahmenut vorgesehen ist und das zweite Schenkelteil ein U-förmig gerundeten Bogen beschreibt, dessen Ende an einer Rastnase der Aufnahmenut zur Anlage gelangt. Durch die gerundete Bogenform des zweiten Schenkelteils wird beim Einsetzen der Aufnahmeschiene erreicht, dass dieses zweite Schenkelteil aufgrund der Elastizität des verwendeten Kunststoffmaterials die zweite Rastnase der Aufnahmenut elastisch und federnd überwindet und mit Erreichen der ursprünglichen Formgebung unterhalb der Rastnase zu liegen kommt, wobei sich die Basis der Aufnahmeschiene mit einem seitlich hervorstehenden Ansatz auf einem Schenkel der Aufnahmenut abstützt. Somit liegt eine doppelseitige Verriegelung der Aufnahmeschiene vor, wodurch ein sicherer Halt gewährleistet wird. Mit Erreichen der ursprünglichen Formgebung der Aufnahmeschiene liegt das zweite Schenkelteil unterhalb der Rastnut und verstärkt die Haltekraft.

Efindungsgemäß ist vorgesehen, dass beide Schenkel der Aufnahmeschiene auf der Innenseite jeweils eine rechteckförmige Aussparung aufweisen, welche jedoch unterschiedliche Abstände zur Basis besitzen. Die beiden rechteckförmigen Aussparungen dienen zum Einschieben der Lichtleiste, damit diese eine feste Position innerhalb der Aufnahmeschiene erhält. Die unterschiedlichen Abstände zur Basis dienen dazu, die Lichtleiste unter einem Neigungswinkel gegenüber der Basis der Aufnahmeschiene anzuordnen, sodass die Lichtabstrahlung vorzugsweise nach unten erfolgt.

In diese rechteckförmige Aussparung wird die Platine mit LEDs eingeschoben. Im Anschluss wird die Platine mit LEDs in der Aufnahmeschiene mit einer transparenten Vergussmasse versiegelt, sodass das Eindringen von Feuchtigkeit verhindert wird.

Der vorliegenden Erfindung liegt der besondere Vorteil zugrunde, dass bei einer Treppenstufe, die für ein öffentliches Verkehrsmittel Verwendung findet, im vorderen Bereich unterhalb der Treppenstufen eine Lichtleiste angeordnet wird, die sowohl die unteren Treppenstufen als gegebenenfalls den Bodenbereich ausleuchten kann, um die Gefahr des Stolperns der Fahrgäste zu verhindern. Um einen Austausch der Treppenstufe zu vermeiden ist erfindungsgemäß vorgesehen, dass in die vorhandene Nut der Treppenstufe eine Aufnahmeschiene mit Lichtleiste eingesetzt werden kann, die sich nach einem möglichen Defekt wieder entfernen lässt und auf diese Weise eine schnelle Reparatur der Treppenstufen ermöglicht, ohne dass ein vollständiger Austausch der Treppenstufe erforderlich wird. Die Aufnahmeschiene mit Lichtleiste wird in diesem Fall mithilfe der nach innen weisenden Schenkel und vorhandenen Rastnasen der Aufnahmenut in derart verriegelt, dass eine sichere Befestigung vorliegt.

Die Erfindung wird im Nachfolgenden anhand der Figuren nochmals erläutert.

Es zeigt
- Fig. 1: in einer Seitenansicht und perspektivischen Darstellung die Aufnahmeschiene und
- Fig. 2: in einer Draufsicht und perspektivischen Ansicht die Aufnahmenut einer Treppenstufe mit eingesetzter Aufnahmeschiene.

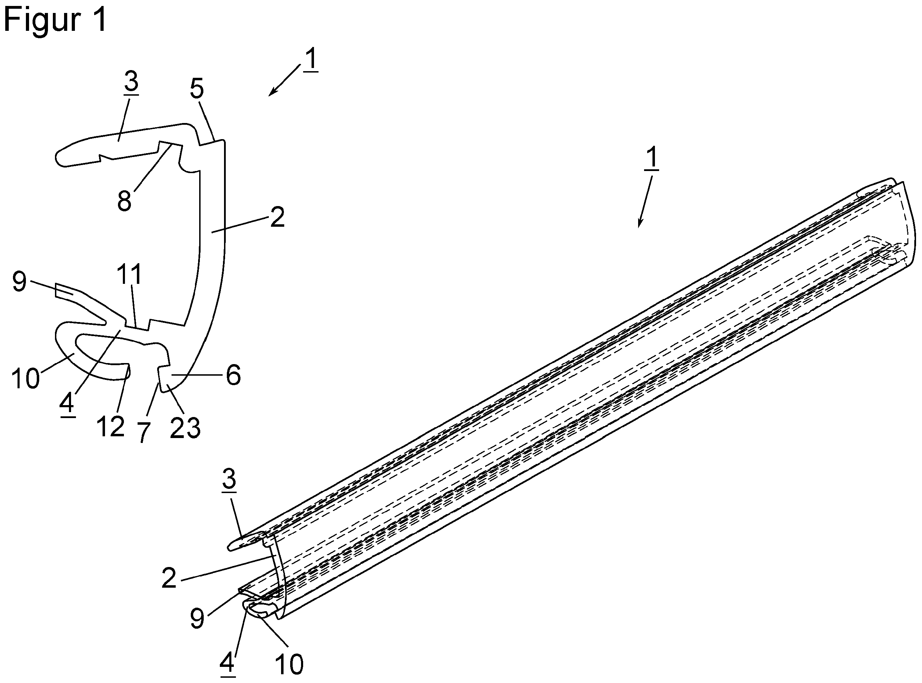

Figur 1 zeigt in einer Draufsicht und perspektivischen Ansicht eine Aufnahmeschiene 1, welche zum Einsetzen in eine Aufnahmenut der Treppenstufe vorgesehen ist und zur Aufnahme einer Lichtleiste dient. Die Aufnahmeschiene 1 weist eine annähernd U-förmige Grundform mit einer Basis 2 und einem ersten Schenkel 3 sowie einem zweiten Schenkel 4 auf. Die Basis 2 besitzt in Höhe des Schenkels 3 eine annähernd rechteckförmige Ausnehmung 5 für eine Rastnase der Aufnahmenut und eine Verlängerung 6 der Basis 2 besitzt eine Anlagefläche 7 für die Aufnahmenut. Der erste Schenkel 3 besitzt einen annähernd geraden Verlauf der eine leichte Neigung gegenüber der Basis 2 besitzt. Auf der Innenseite der Aufnahmeschiene 1 ist eine rechteckförmige Aussparung 8 vorhanden, welche zur Aufnahme einer Lichtleiste dient. Der zweite Schenkel 4 ist an seinem freien Ende gabelförmig in ein erstes Schenkelteil 9 und ein zweites Schenkelteil 10 unterteilt. Der zweite Schenkel 4 besitzt auf der Innenseite eine Aussparung 11, welche gegenüber der ersten Aussparung 8 einen größeren Abstand zur Basis 2 besitzt, sodass die eingesetzte Lichtleiste gegenüber der Aufnahmeschiene 1 einen geneigten Verlauf aufweist, der nach dem Einsetzen in die Aufnahmenut der Treppenstufe somit eine verbesserte Lichtabstrahlung nach unten ermöglicht.

Das zweite Schenkelteil 10 des Schenkels 4 besitzt eine U-förmige Rundung mit einer Anlagefläche 12, die einen Vorsprung der Aufnahmenut hintergreifen kann. Die Aufnahmeschiene 1 wird vorzugsweise aus einem transparenten Kunststoffmaterial hergestellt, der eine gewisse Eigenelastizität aufweist, sodass beim Einsetzen der Aufnahmeschiene 1 mit Lichtleiste das zweite Schenkelteil elastisch federnd gegenüber einer Rastnase der Aufnahmenut zurückgleiten kann und nach Einnehmen der ursprünglichen Position mit der Anlagefläche 12 eine Rastnase der Aufnahmenut hintergreifen kann.

Ein Ansatz (23) der Aufnahmeschiene dient zur Anlage an eine Anlagefläche (7) der Aufnahmenut (14).

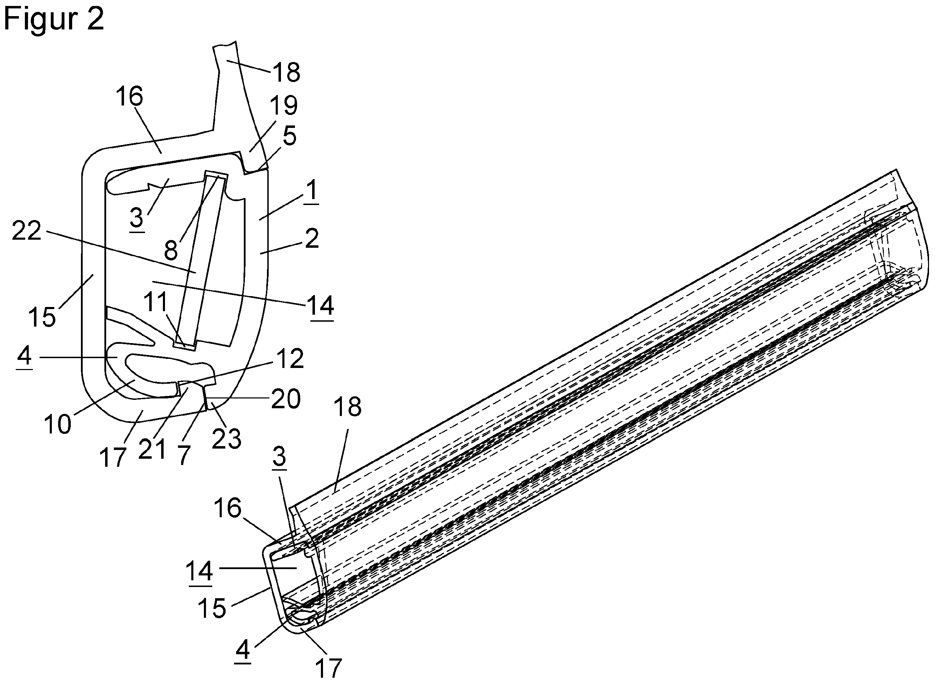

Figur 2 zeigt in einer Draufsicht und einer perspektivischen Ansicht die Aufnahmeschiene 1 nachdem diese in eine Aufnahmenut 14 eingesetzt wurde. Die Aufnahmenut 14 besitzt einen annähernd U-förmigen Querschnitt mit einem ersten Schenkel 16 und einem zweiten Schenkel 17. Die Aufnahmenut 14 ist Bestandteil einer nicht dargestellten Treppe, welche sich an den Fortsatz 18 anschließt. Der erste Schenkel 16 ist mit einem Vorsprung 19 ausgestattet, welcher als Rastnase dient. Der zweite Schenkel 17 weist eine Anlagefläche 20 sowie eine Rastnase 21 auf. Nachdem die Aufnahmeschiene 1 in die Aufnahmenut 14 eingesetzt wurde liegt der erste Schenkel 3 der Aufnahmeschiene 1 an der Innenfläche des ersten Schenkels 16 der Aufnahmenut 14 an. Die Ausnehmung 5 dient zur Aufnahme der Rastnase 21 der Aufnahmenut 14, während die Anlagefläche 7 der Aufnahmeschiene 1 an der Anlagefläche 20 der Aufnahmenut 14 anliegt, während das zweite Schenkelteil 10 des zweiten Schenkels 4 mit der Anlagefläche 12 unterhalb der zweiten Rastnase 21 zu liegen kommt. Wie aus der Figur 2 ersichtlich liegt der Ansatz (23) an der Anlagefläche (7) der Aufnahmenut (14) an. Damit liegt eine Verriegelung der Aufnahmeschiene 1 zu beiden Seiten der Basis 2 vor, welche einen sicheren Halt für die Aufnahmeschiene 1 gewährleistet. Des Weiteren liegt eine Lichtleiste 22 in den beiden Aussparungen 8, 11 der Aufnahmeschiene 1 ein, welche zusätzlich mit einer Vergussmasse innerhalb der Aufnahmeschiene 1 versiegelt wird. Die Vergussmasse ist in dieser Zeichnung nicht dargestellt.

### Bezugszeichenliste:

- 1: Aufnahmeschiene
- 2: Basis
- 3: Schenkel
- 4: Schenkel
- 5: Ausnehmung
- 6: Verlängerung
- 7: Anlagefläche
- 8: Aussparung
- 9: Schenkelteil
- 10: Schenkelteil
- 11: Aussparung
- 12: Anlagefläche
- 14: Aufnahmenut
- 15: Basis
- 16: Schenkel
- 17: Schenkel
- 18: Fortsatz
- 19: Vorsprung
- 20: Anlagefläche
- 21: Rastnase
- 22: Lichtleiste
- 23: Ansatz

## Patentansprüche

1. Lichtleistenanordnung, insbesondere für Türen eines öffentlichen Verkehrsmittels, bestehend aus einer Treppenstufe mit einer Aufnahmenut (14) und einer Lichtleiste (22), welche in die Aufnahmenut (14) einsetzbar ist, wobei sich die Aufnahmenut (14) unterhalb der vorderen sichtbaren Kante befindet und wobei die Aufnahmenut (14) mit zwei Rastmitteln ausgestattet ist, welche ein Hintergreifen durch eine Aufnahmeschiene (1) mit korrespondierenden Verriegelungselementen vorsieht und die Lichtleiste (22) in der Aufnahmeschiene (1) festgelegt ist, wobei die Aufnahmeschiene (1) eine nach außen gewölbte Basis (2) und zwei nach innen zur Aufnahmenut (14) ausgerichtete Schenkel (3, 4) aufweist und beide Schenkel (3, 4) der Aufnahmeschiene (1) auf der Innenseite jeweils eine rechteckförmige Aussparung (8, 11) aufweisen, welche unterschiedliche Abstände zur Basis (2) aufweisen
**dadurch gekennzeichnet,**
**dass** das freie Ende des zweiten Schenkels (4) der Aufnahmeschiene (1) gabelförmig aufgespalten ist, wobei das zum ersten Schenkel (3) ausgerichtete Schenkelteil (9) abstützend zur Anlage an der Basis (15) der Aufnahmenut (14) vorgesehen ist, und
**dass** das zweite Schenkelteil (10) einen U-förmigen gerundeten Bogen beschreibt, dessen Ende an einer Rastnase (21) der Aufnahmenut (14) zur Anlage gelangt.

2. Lichtleistenanordnung nach Anspruch 1,
**dadurch gekennzeichnet,**
**dass** die Aufnahmenut (14) einen annähernd U-förmigen Querschnitt mit zwei Schenkeln (16, 17) aufweist.

3. Lichtleistenanordnung nach Anspruch 2,
**dadurch gekennzeichnet,**
**dass** die Aufnahmenut (14) an ihren beiden Schenkeln (16, 17) jeweils eine nach innen weisende Rastnase (21) oder einen Vorsprung (19) als Rastmittel aufweist.

4. Lichtleistenanordnung nach Anspruch 1, 2 oder 3,
**dadurch gekennzeichnet,**
**dass** die Aufnahmeschiene (1) für die Lichtleiste (22) ebenfalls einen annähernd U-förmigen Querschnitt aufweist.

5. Lichtleistenanordnung nach Anspruch 3 oder 4,
**dadurch gekennzeichnet,**
**dass** die Aufnahmeschiene (1) an der Rastnase (21) anliegt und/oder die Rastnase (21) verriegelnd hintergreift.

6. Lichtleistenanordnung nach einem der Ansprüche 1 bis 5,
**dadurch gekennzeichnet,**
**dass** der erste Schenkel (3) der Aufnahmeschiene (1) auf der Außenseite in Höhe der Basis (2) eine rechteckförmige Ausnehmung (5) aufweist.

7. Lichtleistenanordnung nach einem der Ansprüche 1 bis 6,
**dadurch gekennzeichnet,**
**dass** der zweite Schenkel (4) der Aufnahmeschiene (1) zum ersten Schenkel (3) geneigt verläuft.

8. Lichtleistenanordnung nach einem der Ansprüche 1 bis 7,
**dadurch gekennzeichnet,**
**dass** sich die Basis (2) der Aufnahmeschiene (1) mit einem seitlich hervorstehenden Ansatz (23) auf einem Schenkel (17) der Aufnahmenut (14) abstützt.

9. Lichtleistenanordnung nach einem der Ansprüche 1 bis 8,
**dadurch gekennzeichnet,**
**dass** die Aufnahmeschiene (1) eine mit LEDs bestückte Platine aufnimmt, welche in den beiden nach innen gerichteten rechteckförmigen Aussparungen (8, 11) einliegt.

10. Lichtleistenanordnung nach Anspruch 9,
**dadurch gekennzeichnet,**
**dass** die Platine mit LEDs in der Aufnahmeschiene (1) mit einer transparenten Vergussmasse versiegelt ist.

## Claims

1. Light strip arrangement, in particular for doors of a public means of transport, consisting of a step with a receiving groove (14) and a light strip (22) which can be inserted into the receiving groove (14), wherein the receiving groove (14) is located below the front visible edge and the receiving groove (14) is equipped with two locking means which allow engagement by a receiving rail (1) with corresponding locking elements, and the light strip (22) is fixed in the receiving rail (1), wherein the receiving rail (1) has an outwardly curved base (2) and two legs (3, 4) directed inwardly toward the receiving groove (14), and both legs (3, 4) of the receiving rail (1) each have on their inner side a rectangular recess (8, 11), which have different distances from the base (2),
**characterized in that**
the free end of the second leg (4) of the receiving rail (1) is fork-shapedly split, wherein the leg part (9) directed toward the first leg (3) is provided as a support bearing against the base (15) of the receiving groove (14), and that the second leg part (10) describes a U-shaped rounded arc, the end of which comes to bear against a locking nose (21) of the receiving groove (14).

2. Light strip arrangement according to claim 1,
**characterized in that**
the receiving groove (14) has an approximately U-shaped cross-section with two legs (16, 17).

3. Light strip arrangement according to claim 2,
**characterized in that**
the receiving groove (14) has, on each of its two legs (16, 17), an inwardly directed locking nose (21) or a projection (19) as locking means.

4. Light strip arrangement according to claim 1, 2 or 3,
**characterized in that**
the receiving rail (1) for the light strip (22) likewise has an approximately U-shaped cross-section.

5. Light strip arrangement according to claim 3 or 4,
**characterized in that**
the receiving rail (1) rests against the locking nose (21) and/or engages behind the locking nose (21) in a locking manner.

6. Light strip arrangement according to one of claims 1 to 5,
**characterized in that**
the first leg (3) of the receiving rail (1) has on the outside, at the height of the base (2), a rectangular recess (5).

7. Light strip arrangement according to one of claims 1 to 6,
**characterized in that**
the second leg (4) of the receiving rail (1) extends inclined toward the first leg (3).

8. Light strip arrangement according to one of claims 1 to 7,
**characterized in that**
the base (2) of the receiving rail (1) is supported by means of a laterally projecting extension (23) on one leg (17) of the receiving groove (14).

9. Light strip arrangement according to one of claims 1 to 8,
**characterized in that**
the receiving rail (1) accommodates a board equipped with LEDs, which lies in the two inwardly directed rectangular recesses (8, 11).

10. Light strip arrangement according to claim 9,
**characterized in that**
the board with LEDs is sealed in the receiving rail (1)with a transparent casting compound.

## Revendications

1. Agencement de réglette lumineuse, notamment pour porte d'un moyen de transport public, se composant d'une marche d'escalier comportant une rainure de réception (14) et d'une réglette lumineuse (22) insérable dans la rainure de réception (14), la rainure de réception (14) se trouvant au-dessous du bord avant visible et la rainure de réception (14) étant pourvue de deux moyens de blocage prévoyant la prise par derrière par un rail de réception (1) dans des éléments de verrouillage correspondants, la réglette lumineuse (22) étant immobilisée dans le rail (1), le rail de réception (1) présentant une base (2) cintrée vers l'extérieur ainsi que deux ailes (3, 4) orientées vers l'intérieur vers la rainure de réception (14) et les deux ailes (3, 4) du rail de réception (1) présentant du côté intérieur une encoche (8, 11) chacune de forme rectangulaire étant disposées à des distance différentes par rapport à la base (2),
**caractérisé en ce que** l'extrémité libre du second aile (4) du rail de réception (1) est fendue en forme de fourche, le tronçon d'aile (9) aligné sur la première aile (3) étant prévu de sorte à se serrer contre la base (15) de la rainure de réception (14), et
**en ce que** le second tronçon d'aile (10) décrit un arc cintré en forme de U dont l'extrémité se serre contre un bec de blocage (21) de la rainure de réception (14).

2. Agencement de réglette lumineuse selon la revendication 1, **caractérisé en ce que** la rainure de réception (14) présente une section en forme approximative d'une U à deux ailes (16, 17).

3. Agencement de réglette lumineuse selon la revendication 2,
**caractérisé en ce que**
la rainure de réception (14) présente, sur ses deux ailes (16, 17), un bec de blocage chacun orienté vers l'intérieur (21) ou une protubérance (19) comme moyen de blocage.

4. Agencement de réglette lumineuse selon la revendication 1, 2 ou 3,
**caractérisé en ce que**
le rail de réception (1) de la réglette lumineuse (22) présente également une section en forme approximative d'une U.

5. Agencement de réglette lumineuse selon la revendication 3 ou 4,
**caractérisé en ce que**
le rail de réception (1) se serre contre le bec de blocage (21) et / ou est en prise du bec de blocage (21) derrière celui-ci.

6. Agencement de réglette lumineuse selon l'une des revendications 1 à 5,
**caractérisé en ce que**
la première aile (3) du rail de réception (1) présente, du côté extérieur au niveau de la base (2), une cavité (5) de forme rectangulaire.

7. Agencement de réglette lumineuse selon l'une des revendications 1 à 6,
**caractérisé en ce que**
la seconde aile (4) du rail de réception (1) s'étend en biais par rapport à la première aile (3).

8. Agencement de réglette lumineuse selon l'une des revendications 1 à 7,
**caractérisé en ce que**
la base (2) du rail de réception (1) s'appuie, par un téton (23) en saillie latérale, sur une aile (17) de la rainure de réception (14).

9. Agencement de réglette lumineuse selon l'une des revendications 1 à 8,
**caractérisé en ce que**
le rail de réception (1) reçoit une platine équipée d'électrodes lumineuses qui s'insère dans les deux encoches (8, 11) rectangulaires orientées vers l'intérieur.

10. Agencement de réglette lumineuse selon la revendication 9,
**caractérisé en ce que**
la platine équipée d'électrodes lumineuses est scellée par une masse de scellement transparente dans le rail de réception (1).
